# EUROPEAN PATENT APPLICATION

(11) **EP 4 700 807 A1**
(43) Date of publication of application: **25.02.2026**
(21) Application number: 25729706.9
(22) Date of filing: 20.03.2025
(51) Int. Cl.: H01F 27/28, F16K 31/04

(54) **COIL COMPONENT AND ELECTRICALLY OPERATED VALVE**

(30) Priority: 26.06.2024 CN 202421494029 U; 05.07.2024 CN 202421597756 U
(71) Applicant: Zhejiang Dunan Artificial Environment Co., Ltd., Shaoxing Zhejiang 311835 (CN)
(72) Inventor: ZHANG, Jiyou, Shaoxing, Zhejiang 311835 (CN); CHEN, Yonghao, Shaoxing, Zhejiang 311835 (CN); XU, Guanjun, Shaoxing, Zhejiang 311835 (CN); SI, Bingchen, Shaoxing, Zhejiang 311835 (CN)
(74) Representative: Berggren Oy
(86) International application number: PCT/CN2025/083852
(87) International publication number: WO 2026/001120

(57) **Abstract**

**Provided** in the present invention are a coil component and an electrically operated valve. The coil component includes: a stator assembly having a plurality of pins and an inner hole configured to allow a valve body to pass through, wherein an axial direction of the inner hole toward a valve port of the valve body is defined as a first direction; a wire structure, one end of which is electrically connected to the plurality of pins in the stator assembly; and a fixing structure encapsulating part of the wire structure, wherein a direction in which the wire structure inside the fixing structure extends along a length of the wire structure away from the plurality of pins is defined as a second direction, and an included angle θ between the first direction and the second direction is 0° < θ < 270°. In this solution, the included angle θ between the axial direction of the inner hole toward the valve port of the valve body and the direction in which the wire structure inside the fixing structure extends along the length away from the plurality of pins is set to 0° < θ < 270°. When the wire structure is led upward to connect to a control board during an installation of the coil component, a required bending angle of wires is reduced, the wire length is shortened, and a risk of wire damage due to excessive bending is lowered.

## Description

The present invention claims priorities to Chinese Patent Application No. 202421597756.4 filed with the China National Intellectual Property Administration on July 05, 2024, and entitled "Coil Component and Electrically Operated Valve" and Chinese Patent Application No. 2024214940295 filed with the China National Intellectual Property Administration on June 26, 2024, and entitled "Coil Component".

### Technical Field

The present invention relates to the technical field of electrically operated valves, specifically to a coil component and an electrically operated valve.

### Background

During an installation of an electronic expansion valve or other electrically operated valves, a coil component is sleeved onto a valve body, and wires in the coil component need to be connected to a control board of a whole unit. From the perspective of installation space, both the coil component and the valve body are located below the control board, and an initial lead-out direction of the wires is parallel to an axis of the valve body and extends away from the control board. Therefore, when connecting the wires to the control board, the wires need to be bent at a large bending angle, which increases the wire length and may cause wire damage due to prolonged large-angle bending.

### Summary

The present invention provides a coil component and an electrically operated valve to reduce the bending angle of wires, shorten the wire length, and lower a risk of wire damage caused by large-angle bending.

To achieve the above objectives, according to one aspect of the present invention, a coil component is provided, which includes: a stator assembly having a plurality of pins and an inner hole configured to allow a valve body to pass through, wherein an axial direction of the inner hole toward a valve port of the valve body is defined as a first direction; a wire structure, one end of the wire structure being electrically connected to the plurality of pins in the stator assembly; and a fixing structure encapsulating part of the wire structure, wherein a direction in which the wire structure inside the fixing structure extends along a length of the wire structure away from the plurality of pins is defined as a second direction, and an included angle θ between the first direction and the second direction is 0° < θ < 270°.

Further, 160° ≤ θ ≤ 200°.

Further, θ = 180°.

Further, each of the plurality of pins and the wire structure are directly connected, or each of the plurality of pins and the wire structure are connected via a terminal, or the plurality of pins and the wire structure are connected via a circuit board.

Further, connection positions between the wire structure and the plurality of pins are encapsulated by an injection-molded structure or a potting structure.

Further, the coil component includes an encapsulation structure, the encapsulation structure is an injection-molded structure, and the encapsulation structure is configured to encapsulate at least part of the stator assembly.

Further, the fixing structure is an injection-molded structure, and the fixing structure and the encapsulation structure are configured as an integrally injection-molded structure or separate injection-molded structures.

Further, the encapsulation structure encapsulates connection positions between the plurality of pins and the wire structure.

Or, the coil component further includes a connecting portion, where the connecting portion is sealingly connected to the encapsulation structure, and the connecting portion encapsulates connection positions between the plurality of pins and the wire structure; the coil component further includes an insulating cover, where the insulating cover is fixedly connected to the connecting portion, an injection cavity is provided between the insulating cover and the connecting portion, and the connection positions between the plurality of pins and the wire structure is located within the injection cavity; and a sealing material is injected into the injection cavity, and the sealing material forms the fixing structure.

Further, the coil component includes an upper waterproof cover, which covers a top of the stator assembly and is sealingly connected to the encapsulation structure; and/or a lower waterproof cover, which covers a bottom of the stator assembly and is sealingly connected to the encapsulation structure.

According to another aspect of the present invention, an electrically operated valve is provided, which includes a valve body and the coil component described above, and the valve body passes through an inner hole of the coil component.

In this solution, an included angle θ between the axial direction of the inner hole toward the valve port of the valve body and the direction in which the wire structure inside the fixing structure extends along the length of the wire structure away from the plurality of pins is set to 0° < θ < 270°, whereas in the prior art, the included angle is 0°. By setting the angle within the above range, when the wire structure is led upward to connect to a control board during an installation of the coil component, compared with the prior art, a required bending angle of wires is reduced, the wire length is shortened, and a risk of wire damage due to excessive bending is lowered. Through an arrangement of the fixing structure, an angle of a segment of the wire structure electrically connected to the plurality of pins is constrained, meaning that an extension direction of the wire structure within the fixing structure is fixed.

### Brief Description of the Drawings

The accompanying drawings, which constitute a part of the present invention, are used for providing a further understanding of the present invention; and illustrative embodiments of the present invention and descriptions thereof are intended to explain the present invention and are not construed to unduly limit the present invention. In the drawings:
Fig. 1 shows a schematic view of a coil component according to Embodiment 1 of the present invention;
Fig. 2 shows a schematic view of a coil component according to Embodiment 2 of the present invention;
Fig. 3 shows a schematic view of a coil component according to Embodiment 3 of the present invention;
Fig. 4 shows a schematic view of a coil component according to Embodiment 4 of the present invention;
Fig. 5 shows an enlarged view of region A in Fig. 4;
Fig. 6 shows a schematic view of a coil component according to Embodiment 5 of the present invention;
Fig. 7 shows a schematic view of the position of a coil component in a lead-out surface according to Embodiment 6 of the present invention;
Fig. 8 shows a schematic view of the position of a coil component in a lead-out surface according to Embodiment 7 of the present invention;
Fig. 9 shows a schematic view of the position of a coil component in a lead-out surface according to Embodiment 8 of the present invention; and
Fig. 10 shows a schematic view of the position of a coil component in a lead-out surface according to Embodiment 9 of the present invention.

The following reference signs are involved in the accompanying drawings:
10, stator assembly; 11, stator housing; 111, upper housing; 112, lower housing; 12, coil structure; 20, wire structure; 30, fixing structure; 31, lead-out surface; 32, convex inclined surface; 33, convex arc surface; 34, concave surface; 341, concave inclined surface; 342, concave arc surface; 40, encapsulation structure; 41, filling structure; 42, encapsulated layer; 51, upper waterproof cover; 511, upper rib; 52, lower waterproof cover; 521, lower rib; 60, insulating cover; 61, injection cavity; 70, connecting portion.

### Detailed Description of the Embodiments

The technical solution in embodiments of the present invention will be clearly and completely described below with reference to the accompanying drawings in the embodiments of the present invention. Apparently, the embodiments to be described are only a part rather than all of the embodiments of the present invention. The following description of at least one exemplary embodiment is merely illustrative in nature and is in no way intended to limit the present invention and any invention or use thereof. Based on the embodiments of the present invention, all other embodiments obtained by those of ordinary skill in the art without creative work shall fall within the scope of protection of the present invention.

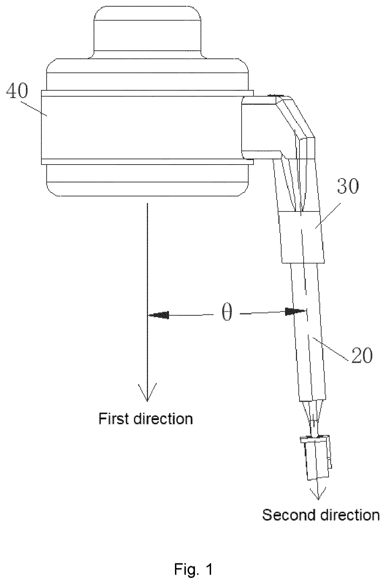

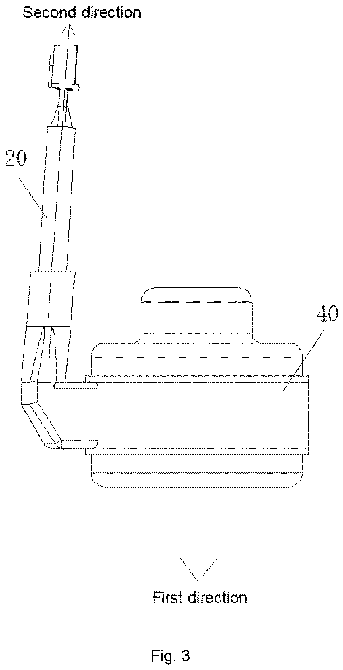

As shown in Fig. 1 to Fig. 6, some embodiments of the present invention provide a coil component, including: a stator assembly 10, which includes a winding, a framework and a plurality of pins, the stator assembly 10 having an inner hole for a valve body to pass through, and an axial direction of the inner hole toward a valve port of the valve body being defined as a first direction; a wire structure 20, one end of which is electrically connected to the plurality of pins in the stator assembly 10; and a fixing structure 30 that encapsulates part of the wire structure 20, a direction in which the wire structure 20 inside the fixing structure 30 extends along a length of the wire structure 20 away from the plurality of pins being defined as a second direction, where an included angle θ between the first direction and the second direction is 0° < θ < 270°. An axis of the valve port is coaxial with an axis of the inner hole.

In this solution, an included angle θ between the axial direction of the inner hole of the stator assembly 10 toward the valve port of the valve body and the direction in which the wire structure 20 inside the fixing structure 30 extends along the length of the wire structure away from the plurality of pins is set to 0° < θ < 270°, whereas in the prior art, the included angle is 0°. By setting the angle within the above range, when the wire structure 20 is led upward to connect to a control board during an installation of the coil component, compared with the prior art, a required bending angle of wires is reduced, the wire length is shortened, and a risk of wire damage due to excessive bending is lowered. Through an arrangement of the fixing structure 30, an angle of a segment of the wire structure 20 electrically connected to the plurality of pins is constrained, meaning that an extension direction of the wire structure 20 within the fixing structure 30 is fixed.

As shown in Fig. 1 to Fig. 3, in different embodiments, the value of θ is set to different angles as required.

In some embodiments, 160° ≤ θ ≤ 200°. An end of the wire structure 20 away from the plurality of pins faces upward. When connected to a control board located above the stator assembly 10, the wire structure 20 does not need to be bent at a large angle, preventing the wire structure 20 from being damaged due to bending, also facilitating connection operations, reducing a required length of the wire structure 20, and saving costs.

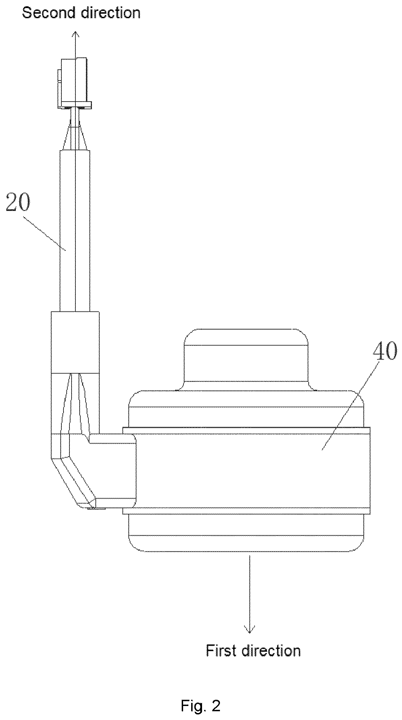

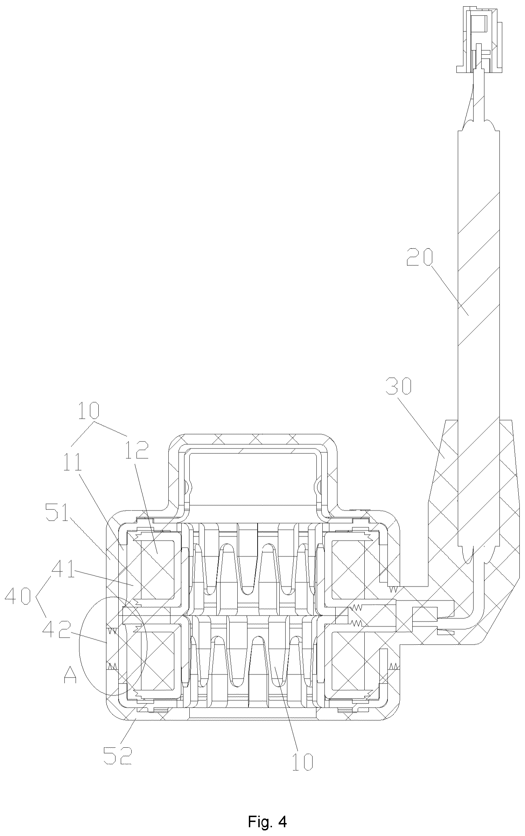

As shown in Fig. 2 and Fig. 4, in some embodiments, θ = 180°, which means that the first direction and the second direction are parallel but oriented oppositely.

In some embodiments, θ is set to 90° ≤ θ < 160°, or 20° < θ < 270°.

The wire structure 20 includes a plurality of wires, an insulating sheath wrapping the plurality of wires, and a connector. An end of each wire is connected to at least one of the plurality of pins, and an other end of the wire is connected to the connector, which is configured to connect to the control board.

The plurality of pins and the wire structure 20 can be electrically connected in different manners. For example, each of the plurality of pins and the wire structure 20 are directly connected, or each of the plurality of pins and the wire structure 20 are connected via a terminal, or the plurality of pins and the wire structure 20 are connected via a circuit board.

Connection positions between the wire structure 20 and the plurality of pins are encapsulated by an injection-molded structure or a potting structure. This secures a relative position of the wire structure 20 and the plurality of pins, preventing detachment of the two and also providing waterproof and insulating functions.

In some embodiments, the coil component further includes an encapsulation structure 40. The encapsulation structure 40 is an injection-molded structure. The encapsulation structure 40 is configured to encapsulate at least part of the stator assembly 10. For example, the encapsulation structure 40 is configured to encapsulate a winding inside the stator assembly 10, or part of an outer surface of the stator assembly 10, or the entire outer surface of the stator assembly 10. The encapsulation structure 40 serves to protect the stator assembly 10.

As shown in Fig. 1 to Fig. 4, in some embodiments, the encapsulation structure 40 also encapsulates connection positions between the plurality of pins and the wire structure 20. This secures a relative position of the wire structure 20 and the plurality of pins, preventing detachment of the two and providing waterproof and insulating functions like a connecting portion 70 at the plurality of pins and the wire structure 20.

In some embodiments, the fixing structure 30 is an injection-molded structure, and the encapsulation structure 40 and the fixing structure 30 are configured as an integrally injection-molded structure, with at least part of the stator assembly 10 and at least part of the wire structure 20 serving as inserts in the integrated injection molding process. Or, in some embodiments, the encapsulation structure 40 and the fixing structure 30 are configured as separate injection-molded structures, which are molded in different steps and sealingly connected.

As shown in Fig. 4, in some embodiments, the coil component further includes: an upper waterproof cover 51, which covers a top of the stator assembly 10 and is sealingly connected to the encapsulation structure 40; and/or a lower waterproof cover 52, which covers a bottom of the stator assembly 10 and is sealingly connected to the encapsulation structure 40. The upper waterproof cover 51 prevents water ingress from the top of the stator assembly 10, and the lower waterproof cover 52 prevents water ingress from the bottom of the stator assembly 10, thereby enhancing the waterproof performance of the coil component.

In some embodiments, the upper waterproof cover 51 is connected to the encapsulation structure 40 by welding or injection molding; and the lower waterproof cover 52 is connected to the encapsulation structure 40 by welding or injection molding. The use of welding or injection molding for connection ensures high connection strength and good sealing performance, which not only prevents the ingress of external liquid but also reduces or eliminates the formation of condensation inside a sealed cavity, thereby extending the service life of internal structures. Further, an annular gap is formed between the upper waterproof cover 51 and the lower waterproof cover 52, and the encapsulation structure 40 is formed from a material injected into the annular gap and an assembly gap of the stator assembly 10.

Specifically, welding refers to a process where the upper waterproof cover 51, the lower waterproof cover 52 and the encapsulation structure 40 are separately molded, then the upper waterproof cover 51 and the lower waterproof cover 52 are assembled onto the stator assembly 10 and subsequently connected to the encapsulation structure 40 through a welding process, respectively. Injection-molded connection refers to a process where the upper waterproof cover 51 and the lower waterproof cover 52 are first assembled onto the stator assembly 10, followed by injection molding of the encapsulation structure 40. During an injection molding process, not only is the encapsulation structure 40 formed, but a connection of the encapsulation structure 40 to the upper waterproof cover 51 and the lower waterproof cover 52 is also achieved.

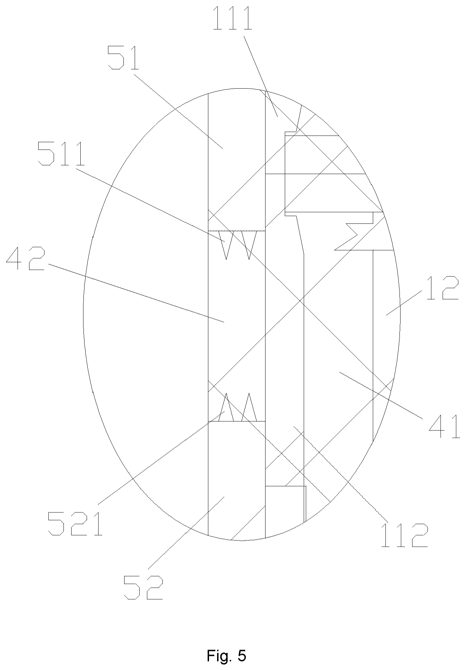

As shown in Fig. 5, an end of the upper waterproof cover 51 facing the encapsulation structure 40 is an annular upper mating surface, and the upper mating surface is provided with at least one annular upper rib 511, and the upper waterproof cover 51 is connected to the encapsulation structure 40 through the at least one upper rib 511; and an end of the lower waterproof cover 52 facing the encapsulation structure 40 is an annular lower mating surface, the lower mating surface is provided with at least one annular lower rib 521, and the lower waterproof cover 52 is connected to the encapsulation structure 40 through the at least one lower rib 521.

When a welding process is adopted, the at least one heated upper rib 511 melts, bonding and sealing the upper waterproof cover 51 to the encapsulation structure 40. After a material is solidified, a reliable connection between the two is established. Similarly, the at least one heated lower rib 521 melts, bonding and sealing the lower waterproof cover 52 to the encapsulation structure 40. After the material is solidified, a reliable connection between the two is established.

When a injection molding connection process is adopted, during the injection molding of the encapsulation structure 40, an injection molding material wraps around the at least one upper rib 511 and the at least one lower rib 521, increasing a contact area at a connection position, thereby enhancing connection strength and sealing effect. In some embodiments, a plurality of upper ribs 511 and a plurality of lower ribs 521 are provided to further improve connection strength and sealing effect.

In some embodiments, the upper waterproof cover 51 is welded to the encapsulation structure 40 via the at least one upper rib 511, the upper mating surface is provided with an annular upper welding groove, and the upper welding groove is configured to accommodate an excess material melted from the at least one upper rib 511; and the lower waterproof cover 52 is welded to the encapsulation structure 40 via the at least one lower rib 521, the lower mating surface is provided with an annular lower welding groove, and the lower welding groove is configured to accommodate an excess material melted from the at least one lower rib 521. Through the design of the upper welding groove and the lower welding groove, the uncontrolled flow of excess material melted during the welding process is prevented, thereby improving product quality.

In some embodiments, the upper waterproof cover 51 and the lower waterproof cover 52 are connected to the encapsulation structure 40 by injection molding. Specifically, an annular gap is formed between the upper waterproof cover 51 and the lower waterproof cover 52, and the encapsulation structure 40 is formed from a material injected into the annular gap and an assembly gap of the stator assembly 10. During an injection molding process, the encapsulation structure 40 is connected to the upper waterproof cover 51 and the lower waterproof cover 52. That is, the upper waterproof cover 51 and the lower waterproof cover 52 are first assembled onto the stator assembly 10, followed by injection molding of the encapsulation structure 40. During the injection molding process, not only is the encapsulation structure 40 formed, but a connection of the encapsulation structure 40 to the upper waterproof cover 51 and the lower waterproof cover 52 is also achieved. This reduces the number of production steps and improves production efficiency.

In some embodiments, the stator assembly 10 includes a stator housing 11 and a coil structure 12 located within the stator housing 11, the assembly gap is located between the stator housing 11 and the coil structure 12; the encapsulation structure 40 includes a filling structure 41 and an encapsulation layer 42, where the filling structure 41 is located within the assembly gap, and the encapsulation layer 42 is located within the annular gap; and the filling structure 41, the encapsulation layer 42, and the fixing structure 30 are integrally injection-molded. Through this design, the filling structure 41 fills the assembly gap between the stator housing 11 and the coil structure 12, thereby securing the coil structure 12. Moreover, the filling structure 41, the encapsulation layer 42 and the fixing structure 30 are integrally injection-molded, simplifying production steps and enhancing sealing effect and structural strength of the coil component.

In some embodiments, the stator housing 11 includes an upper housing 111 and a lower housing 112, an end of the upper housing 111 and an end of the lower housing 112 are in contact at a junction position, and the coil structure 12 is located in a cavity between the upper housing 111 and the lower housing 112; and in an axial direction of the stator housing 11, the encapsulation layer 42 is spaced apart from the junction position. If pores are formed in the encapsulation layer 42 due to injection molding defects and correspond to the junction position, the sealing effect of the stator assembly 10 may be compromised. Therefore, the encapsulation layer 42 is spaced apart from the junction position to prevent any adverse impact on the sealing effect.

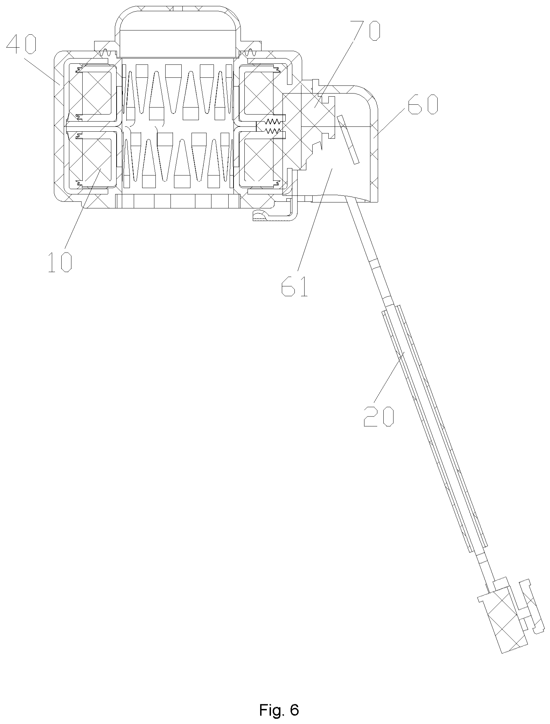

As shown in Fig. 6, in a specific embodiment, the coil component further includes a connecting portion 70, where the connecting portion 70 is sealingly connected to the encapsulation structure 40, and the connecting portion 70 encapsulates connection positions between the plurality of pins and the wire structure 20; the coil component further includes an insulating cover 60, where the insulating cover 60 is fixedly connected to the connecting portion 70, an injection cavity 61 is provided between the insulating cover 60 and the connecting portion 70, and the connection positions between the plurality of pins and the wire structure 20 is located within the injection cavity 61; and a sealing material is injected into the injection cavity 61, and the sealing material forms the fixing structure 30. In this way, by filling the sealing material, a direction of part of the wire structure 20 electrically connected to the plurality of pins is constrained, and the sealing and protection effects are also achieved. The connection portion 70 and the encapsulation structure 40 are sealingly connected and may be configured as an integrally molded structure or separate molded structures. The sealing material may be a sealant or other materials.

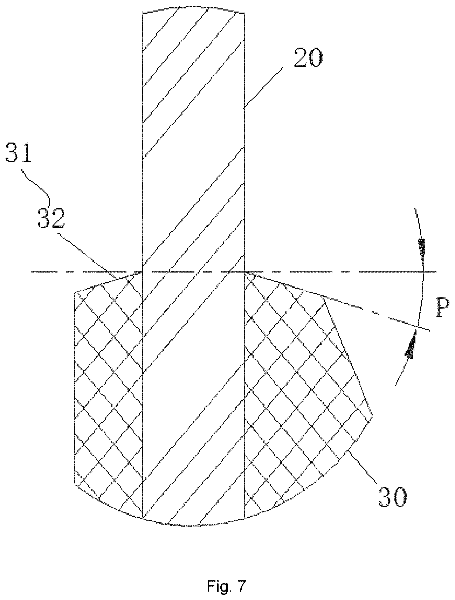

As shown in Fig. 7 to Fig. 9, in some embodiments, an end of the fixing structure 30 away from the stator assembly 10 is provided with a lead-out surface 31, the wire structure 20 passes through the lead-out surface 31, and the lead-out surface 31 is not perpendicular to a length direction of the wire structure 20. This configuration prevents water accumulation at a connection position between the lead-out surface 31 and the wire structure 20, thereby preventing failure of the coil component caused by water ingress due to water accumulation on the lead-out surface 31. Accordingly, a problem of an electrically operated valve failing due to water leakage at a connection position between the fixing structure 30 and the wire structure 20 of the coil component is resolved. In some embodiments, the electrically operated valve is specifically an electronic expansion valve.

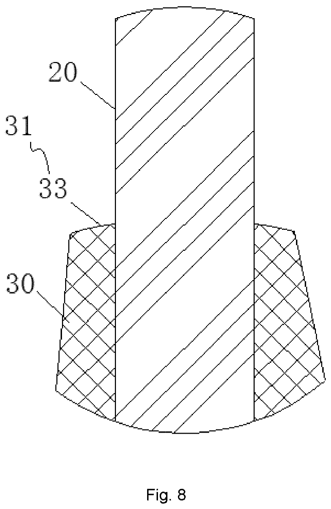

As shown in Fig. 7 and Fig. 8, the lead-out surface 31 includes a convex surface, an end of the wire structure 20 close to the stator assembly 10 serves as a first end, an other end of the wire structure 20 serves as a second end, and the convex surface protrudes in a direction away from the first end.

With this configuration, when the wire structure 20 is disposed on an upward side of the fixing structure 30, the convex surface protrudes toward the first end. This prevents the convex surface from being perpendicular to a length direction of the wire structure 20, allowing water to slide off the convex surface rather than accumulating at a connection position between the convex surface and the wire structure 20. When the wire structure 20 is disposed on a downward side of the fixing structure 30, water flows downward along the wire structure 20 due to gravity, preventing water accumulation at the connection position between the convex surface and the wire structure 20.

As shown in Fig. 7, in Embodiment 6 of the present invention, the convex surface includes a convex inclined surface 32, the convex inclined surface 32 is inclined relative to a radial surface of the wire structure 20, a side of the convex inclined surface 32 close to the wire structure 20 serves as an inner ring, a side of the convex inclined surface 32 away from the wire structure 20 serves as an outer ring, and a distance from the inner ring to the first end is greater than a distance from the outer ring to the first end.

With this configuration, the convex inclined surface 32 is inclined relative to the radial surface of the wire structure 20, allowing water to flow down along the convex inclined surface 32 and preventing water accumulation at the connection position between the convex inclined surface 32 and the wire structure 20. The distance between the inner ring and the first end is greater than the distance between the outer ring and the first end, so that the convex inclined surface 32 forms a conical surface, preventing water accumulation on the convex inclined surface 32.

Further, in Embodiment 6 of the present invention, an angle P between the convex inclined surface 32 and the radial surface of the wire structure 20 is 0° < P ≤ 45°.

With this configuration, setting P within a range of 0° to 45° can ensure the effect of preventing water accumulation as well as maintaining the strength at the end of the fixing structure 30 away from the stator assembly 10. A larger angle between the convex inclined surface 32 and the radial surface of the wire structure 20 results in a steeper convex inclined surface 32, which enhances the effect of preventing water accumulation. However, this causes the end of the fixing structure 30 away from the stator assembly 10 to become thinner, reducing the strength of the convex inclined surface 32. Setting 0° < P ≤ 45° enables the convex inclined surface 32 to prevent water accumulation and also ensures the strength of the end of the fixing structure 30 away from the stator assembly 10.

As shown in Fig. 8, in Embodiment 7 of the present invention, the convex surface includes a convex arc surface 33, and a curvature of the convex arc surface 33 protrudes in a direction away from the first end.

With this configuration, the curvature of the convex arc surface 33 protrudes in the direction away from the first end, allowing water to flow down along the curvature of the convex arc surface 33 and preventing water accumulation at a connection position between the convex arc surface 33 and the wire structure 20, thereby achieving a purpose of preventing water accumulation and preventing performance failure of an electrically operated valve due to water ingress into the connection position between the stator assembly 10 and the wire structure.

During an operation of the coil component of the electrically operated valve, temperature variations cause the materials of the wire structure 20 and the fixing structure 30 to contract or stretch. Since the materials of the wire structure 20 and the fixing structure 30 are different, tearing stress is generated due to the different amounts of contraction or stretching deformation caused by different coefficients of thermal expansion of different materials. In Embodiment 6 and Embodiment 7 of the present invention, a configuration of the convex surface reduces a thickness of the end of the fixing structure 30 away from the stator assembly 10, thereby minimizing tearing stress, preventing connection failure between the fixing structure 30 and the wire structure 20, and reducing a risk of electrically operated valve failure caused by water seepage between the fixing structure 30 and the wire structure 20.

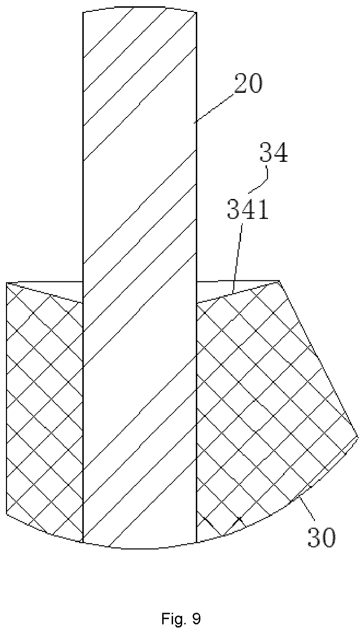

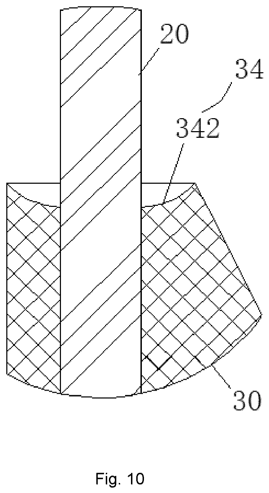

As shown in Fig. 9 and Fig. 10, the lead-out surface 31 includes a concave surface 34, one end of the wire structure 20 close to the stator assembly 10 serves as a first end, and the concave surface 34 is reassessed in a direction toward the first end.

After an electrically operated valve is installed on a user's device, if an extension direction of the wire structure 20 led out from the fixing structure 30 is oriented approximately downward along the vertical axis after installation, the concave surface 34 is configured to prevent water accumulation at an end of the fixing structure 30 away from the stator assembly 10.

As shown in Fig. 9, in Embodiment 8 of the present invention, a sidewall of the concave surface 34 is a concave inclined surface 341, the convex inclined surface 341 is inclined relative to a radial surface of the wire structure 20, a side of the concave inclined surface 341 close to the wire structure 20 serves as an inner ring, a side of the concave inclined surface 341 away from the wire structure 20 serves as an outer ring, and a distance from the inner ring to the first end is greater than a distance from the outer ring to the first end.

With this configuration, after the electrically operated valve is installed on the user's device and the extension direction of the wire structure 20 led out from the fixing structure 30 is oriented approximately downward along the vertical axis, water can flow down along the concave inclined surface 341 and is less likely to accumulate at a connection position between the concave inclined surface 341 and the wire structure 20. This helps prevent performance failure of the electrically operated valve due to water seepage into the fixing structure 30 through a connection position between the fixing structure 30 and the wire structure 20. Since the distance between the inner ring and the first end is smaller than the distance between the outer ring and the first end, the concave inclined surface 341 is recessed inward. After the electrically operated valve is installed and the extension direction of the wire structure 20 led out from the fixing structure 30 is oriented approximately downward along the vertical axis, the wire structure 20 is disposed on the downward side of the fixing structure 30, and water is less likely to accumulate in a recess.

As shown in Fig. 10, in Embodiment 9 of the present invention, a sidewall of the concave surface 34 is a concave arc surface 342, which is recessed toward the fixing structure 30.

With this configuration, after a electrically operated valve is installed and a direction of the wire structure 20 led out from the fixing structure 30 is oriented approximately downward along the vertical axis, the wire structure 20 is disposed on the downward side of the fixing structure 30, and water can flow down along the curvature of the concave arc surface 342, so that water is less likely to accumulate at the concave arc surface 342. This helps prevent performance failure of the electrically operated valve due to water seepage into the fixing structure 30 through a connection position between the fixing structure 30 and the wire structure 20.

In Embodiment 8 and Embodiment 9 of the present invention, the configuration of the concave surface 34 reduces the thickness of an end of the fixing structure 30 away from the stator assembly 10, thereby minimizing tearing stress, preventing connection failure between the fixing structure 30 and the wire structure 20, and reducing a risk of electrically operated valve failure caused by water seepage between the fixing structure 30 and the wire structure 20.

In some embodiments, the wire structure 20 includes a plurality of wires and an insulating housing encapsulating an outer side of the plurality of wires, the plurality of wires are arranged side by side, and a cross-section of the insulating housing is in the shape of a flat tube. With this configuration, the plurality of wires are arranged side by side and encapsulated by the insulating housing, ensuring that the sequence of the plurality of wires is fixed and preventing wire disorder during an installation of the electrically operated valve. The cross-section of the insulating housing is the flat tube, and an outer side of the flat tube is connected to the fixing structure 30.

In some embodiments, the wire structure 20 includes a plurality of wires and an insulating housing sleeved on an outer side of the plurality of wires, and a cross-section of the insulating housing is circular. The cross-section of the insulating housing is circular, and the fixing structure 30 is fixedly connected to an outer side of the circular insulating housing.

In some embodiments, an end of the wire structure 20 is connected to the stator assembly 10, and an other end of the wire structure 20 is connected to a connector. After the stator assembly 10 is initially connected to the wire structure 20, the fixing structure 30 is formed through injection molding or potting, thereby achieving a fixed connection between the wire structure 20 and the stator assembly 10 through the fixing structure 30.

In some embodiments, after the plurality of pins of the stator assembly 10 are electrically connected to the wire structure 20, part of structure of the stator assembly 10 and the wire structure 20 serve as inserts, which are integrally injection-molded into the fixing structure 30.

Some embodiments shown in Fig. 7 to Fig. 10 provide the following effects:
1. The lead-out surface 31 at the end of the fixing structure 30 away from the stator assembly 10 is not perpendicular to the length direction of the wire structure 20, allowing water to flow down along the lead-out surface 31 and preventing water accumulation at the lead-out surface 31. This design helps avoid water accumulation at the connection position between the wire structure 20 and the fixing structure 30, which could otherwise lead to water slowly seeping into the coil, causing a short circuit and performance failure of the electrically operated valve.
2. During the operation of the coil component of the electrically operated valve, temperature variations cause the materials of the wire structure 20 and the fixing structure 30 to contract or stretch. Since the materials of the wire structure 20 and the fixing structure 30 are different, tearing stress is generated due to the different amounts of contraction or stretching deformation caused by different coefficients of thermal expansion of different materials. With the configuration of the convex surface or the concave surface, the thickness of the end of the fixing structure 30 away from the stator assembly 10 is reduced, thereby lowering the tearing stress caused by deformation at the end of the fixing structure 30 away from the stator assembly 10. This slows down the reduction in bonding strength between the wire structure 20 and the fixing structure 30, enabling the connection between the wire structure 20 and the fixing structure 30 to be more secure and less prone to cracking and water seepage, thereby preventing failure of the electrically operated valve.
3. The angle P between the convex inclined surface 32 and the radial surface of the wire structure 20 is set to 0° < P ≤ 45°. A larger angle between the convex inclined surface 32 and the radial surface of the wire structure 20 results in a steeper convex inclined surface 32, which enhances the effect of preventing water accumulation. However, this causes the end of the fixing structure 30 away from the stator assembly 10 to become thinner, reducing the strength of the convex inclined surface 32. Setting 0° < P ≤ 45° enables the convex inclined surface 32 to prevent water accumulation and also ensures the strength of the end of the fixing structure 30 away from the stator assembly 10.

The present invention further provides an electrically operated valve, which includes a valve body and the coil component described above, and the valve body passes through an inner hole of the coil component. The electrically operated valve is a type of valve, including an electronic expansion valve and similar types. In this solution, the included angle θ between the axial direction of the inner hole of the stator assembly 10 toward the valve port of the valve body and the direction in which the wire structure 20 extends away from the plurality of pins along its length is set to 0° < θ < 270°, whereas in the prior art, the included angle is 0°. By setting the angle within the above range, when the wire structure 20 is led upward to connect to a control board during the installation of the coil component, compared with the prior art, a required bending angle of wires is reduced, the wire length is shortened, and a risk of wire damage due to large-angle bending is lowered.

The foregoing is merely a preferred embodiment of the present invention and is not intended to limit the present invention which may be subject to various modifications and variations to those skilled in the art. Any modification, equivalent replacement, improvement, etc. made within the spirit and principles of the present invention should fall within the scope of protection of the present invention.

## Claims

1. **A coil** component, comprising:
a stator assembly (10), wherein the stator assembly (10) has a plurality of pins and an inner hole configured to allow a valve body to pass through, and an axial direction of the inner hole toward a valve port of the valve body is defined as a first direction;
a wire structure (20), one end of the wire structure (20) being electrically connected to the plurality of pins in the stator assembly (10); and
a fixing structure (30), the fixing structure (30) encapsulating part of the wire structure (20), wherein a direction in which the wire structure (20) inside the fixing structure (30) extends along a length of the wire structure (20) away from the plurality of pins is defined as a second direction;
wherein an included angle θ between the first direction and the second direction is 0° < θ < 270°.

2. The coil component according to claim 1, wherein 160° ≤ θ ≤ 200°.

3. The coil component according to claim 1, wherein each of the plurality of pins and the wire structure (20) are directly connected, or each of the plurality of pins and the wire structure (20) are connected via a terminal, or the plurality of pins and the wire structure (20) are connected via a circuit board; and connection positions between the wire structure (20) and the plurality of pins are encapsulated by an injection-molded structure or a potting structure.

4. The coil component according to claim 1, further comprising an encapsulation structure (40), wherein the encapsulation structure (40) is an injection-molded structure, and the encapsulation structure (40) is configured to encapsulate at least part of the stator assembly (10); the fixing structure (30) is an injection-molded structure, and the fixing structure (30) and the encapsulation structure (40) are configured as an integrally injection-molded structure or separate injection-molded structures.

5. The coil component according to claim 4, wherein the encapsulation structure (40) further encapsulates connection positions between the plurality of pins and the wire structure (20).

6. The coil component according to claim 4, further comprising a connecting portion (70), wherein the connecting portion (70) is sealingly connected to the encapsulation structure (40), and the connecting portion (70) encapsulates connection positions between the plurality of pins and the wire structure (20); the coil component further comprises an insulating cover (60), wherein the insulating cover (60) is fixedly connected to the connecting portion (70), an injection cavity (61) is provided between the insulating cover (60) and the connecting portion (70), and the connection positions between the plurality of pins and the wire structure (20) are located within the injection cavity (61); and a sealing material is injected into the injection cavity (61), and the sealing material forms the fixing structure (30).

7. The coil component according to claim 4, further comprising:
an upper waterproof cover (51), wherein the upper waterproof cover (51) covers a top of the stator assembly (10), and the upper waterproof cover (51) is sealingly connected to the encapsulation structure (40); and/or
a lower waterproof cover (52), wherein the lower waterproof cover (52) covers a bottom of the stator assembly (10), and the lower waterproof cover (52) is sealingly connected to the encapsulation structure (40).

8. The coil component according to claim 7, wherein the upper waterproof cover (51) is connected to the encapsulation structure (40) by welding or injection molding; and the lower waterproof cover (52) is connected to the encapsulation structure (40) by welding or injection molding.

9. The coil component according to claim 7, wherein an end of the upper waterproof cover (51) facing the encapsulation structure (40) is an annular upper mating surface, and the upper mating surface is provided with at least one annular upper rib (511), and the upper waterproof cover (51) is connected to the encapsulation structure (40) through the at least one upper rib (511); and an end of the lower waterproof cover (52) facing the encapsulation structure (40) is an annular lower mating surface, the lower mating surface is provided with at least one annular lower rib (521), and the lower waterproof cover (52) is connected to the encapsulation structure (40) through the at least one lower rib (521).

10. The coil component according to claim 9, wherein the upper waterproof cover (51) is welded to the encapsulation structure (40) via the at least one upper rib (511), the upper mating surface is provided with an annular upper welding groove, and the upper welding groove is configured to accommodate an excess material melted from the at least one upper rib (511); and the lower waterproof cover (52) is welded to the encapsulation structure (40) via the at least one lower rib (521), the lower mating surface is provided with an annular lower welding groove, and the lower welding groove is configured to accommodate an excess material melted from the at least one lower rib (521).

11. The coil component according to claim 4, further comprising an upper waterproof cover (51) and a lower waterproof cover (52), wherein an annular gap is formed between the upper waterproof cover (51) and the lower waterproof cover (52), and the encapsulation structure (40) is formed from a material injected into the annular gap and an assembly gap of the stator assembly (10).

12. The coil component according to claim 11, wherein during an injection molding process, the encapsulation structure (40) is connected to the upper waterproof cover (51) and the lower waterproof cover (52); the stator assembly (10) comprises a stator housing (11) and a coil structure (12) located within the stator housing (11), the assembly gap being located between the stator housing (11) and the coil structure (12); the encapsulation structure (40) comprises a filling structure (41) and an encapsulation layer (42), wherein the filling structure (41) is located within the assembly gap, and the encapsulation layer (42) is located within the annular gap; and the filling structure (41), the encapsulation layer (42), and the fixing structure (30) are integrally injection-molded.

13. The coil component according to claim 12, wherein the stator housing (11) comprises an upper housing (111) and a lower housing (112), an end of the upper housing (111) and an end of the lower housing (112) are in contact at a junction position, and the coil structure (12) is located in a cavity between the upper housing (111) and the lower housing (112); and in an axial direction of the stator housing (11), the encapsulation layer (42) is spaced apart from the junction position.

14. The coil component according to claim 1, wherein an end of the fixing structure (30) away from the stator assembly (10) is provided with a lead-out surface (31), the wire structure (20) passes through the lead-out surface (31), and the lead-out surface (31) is not perpendicular to a length direction of the wire structure (20).

15. The coil component according to claim 14, wherein the lead-out surface (31) comprises a convex surface, an end of the wire structure (20) close to the stator assembly (10) serves as a first end, an other end of the wire structure (20) serves as a second end, and the convex surface protrudes in a direction away from the first end.

16. The coil component according to claim 15, wherein
the convex surface comprises a convex inclined surface (32), the convex inclined surface (32) is inclined relative to a radial surface of the wire structure (20), a side of the convex inclined surface (32) closer to the wire structure (20) serves as an inner ring, a side of the convex inclined surface (32) away from the wire structure (20) serves as an outer ring, and a distance from the inner ring to the first end is greater than a distance from the outer ring to the first end;
or, the convex surface comprises a convex arc surface (33), and a curvature of the convex arc surface (33) protrudes in a direction away from the first end.

17. The coil component according to claim 14, wherein the lead-out surface (31) comprises a concave surface (34), an end of the wire structure (20) close to the stator assembly (10) serves as a first end, and the concave surface (34) is recessed in a direction toward the first end.

18. The coil component according to claim 17, wherein a sidewall of the concave surface (34) is a concave inclined surface (341), the concave inclined surface (341) is inclined relative to a radial surface of the wire structure (20), a side of the concave inclined surface (341) close to the wire structure (20) serves as an inner ring, and a side of the concave inclined surface (341) away from the wire structure (20) serves as an outer ring; a distance from the inner ring to the first end is less than a distance from the outer ring to the first end; or, a sidewall of the concave surface (34) is a concave arc surface (342), and the concave arc surface (342) is recessed in a direction toward the fixing structure (30).

19. The coil component according to claim 14, wherein
the wire structure (20) comprises a plurality of wires and an insulating housing encapsulating an outer side of the plurality of wires, the plurality of wires are arranged side by side, and a cross-section of the insulating housing is in a shape of a flat tube;
or, the wire structure (20) comprises a plurality of wires and an insulating housing sleeved on an outer side of the plurality of wires, and a cross-section of the insulating housing is circular.

20. An electrically operated valve, comprising a valve body and the coil component according to any one of claims 1 to 19, wherein the valve body passes through an inner hole of the coil component.
